(19) Europäisches Patentamt
European Patent Office
Office européen des brevets

(11) **EP 2 800 420 A1**

(12) **EUROPEAN PATENT APPLICATION**
published in accordance with Art. 153(4) EPC

(43) Date of publication:
**05.11.2014 Bulletin 2014/45**

(21) Application number: **12863162.9**

(22) Date of filing: **12.12.2012**

(51) Int Cl.:
*H04W 48/18* (2009.01)  *H04B 1/707* (2011.01)
*H04W 36/14* (2009.01)  *H04W 72/04* (2009.01)
*H04W 88/06* (2009.01)

(86) International application number:
**PCT/JP2012/082244**

(87) International publication number:
**WO 2013/099615 (04.07.2013 Gazette 2013/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2011 JP 2011286882**

(71) Applicant: **NTT Docomo, Inc.
Tokyo 100-6150 (JP)**

(72) Inventor: **SUZUKI, Mototsugu
Tokyo 100-6150 (JP)**

(74) Representative: **Maury, Richard Philip
Marks & Clerk LLP
90 Long Acre
London WC2E 9RA (GB)**

(54) **USER TERMINAL, BASE STATION, AND COMMUNICATION CONTROL METHOD**

(57) A user terminal includes a memory unit for storing frequency arrangement information indicating a relationship between a first frequency band used by the user terminal and a second frequency band used by a neighbor cell other than a cell that communicates with the user terminal, and a cell transition index calculating formula that is used when calculating a cell transition index that is used when determining whether a cell transition is to be performed according to the frequency arrangement information; a cell transition index calculating unit for identifying a frequency arrangement based on a downlink signal and the frequency arrangement information stored in the memory unit and for calculating the cell transition index according to the cell transition index calculating formula corresponding to the frequency arrangement; and a cell transition control unit for performing cell transition control using the cell transition index calculated by the cell transition calculating unit.

FIG.14

```
                    START
                      |
                      | S1402
        MEASURE SERVING CELL
          AND NEIGHBOR CELL
                      |
                      | S1404
              IDENTIFY
        FREQUENCY ARRANGEMENT
                      |
                      | S1406
       CALCULATE CELL TRANSITION
             INDEX ACCORDING TO
         FREQUENCY ARRANGEMENT
                      |
                      | S1408
              IDLE MODE? ——NO——————————————————┐
                  |                             |
                 YES                            |
                  | S1410                       | S1414
       COMPARE WITH THRESHOLD        SEND MEASUREMENT REPORT
          FOR ANOTHER CELL                      |
                  |                             | S1416
                  |                    RECEIVE HANDOVER
                  |                 INSTRUCTION FROM NETWORK
                  | S1412                       | S1418
          PERFORM CELL                   PERFORM CELL
        TRANSITION PROCESS            TRANSITION PROCESS
```

EP 2 800 420 A1

**Description**

<u>TECHNICAL FIELD</u>

The present invention relates to a radio communication system.

<u>BACKGROUND ART</u>

Specifications of Long Term Evolution (LTE) are being developed by the standardization body of W-CDMA (Wideband-Code Division Multiple Access), 3GPP (3rd Generation Partnership Project). The W-CDMA is also called UMTS (Universal Mobile Telecommunications System). The LTE is a standard that is further extended from HSPA (High Speed Packet Access) that is an extended technology of the W-CDMA. In the LTE, a high speed communication has been realized in which the communication speed in the downlink is equal to or more than 100 Mbps and the communication speed in the uplink is equal to or more than 50 Mbps and an improvement of the delay and an advancement of the frequency usage efficiency are planned.

As a result of introducing a radio communication system based on LTE (referred to as an "LTE system" in the following), an existing radio communication system and an LTE system co-exist. The existing system includes a 3rd generation radio communication system (referred to as a "3G system").

It is known that a cell quality ranking criterion for a measured cell is used for a cell re-selection procedure and a handover procedure. Regarding the cell quality ranking criterion, it is different depending on whether the measured cell is a serving cell or a neighbor cell (for example, refer to patent document 1).

<u>RELATED ART DOCUMENT</u>

[PATENT DOCUMENT 1] Japanese Patent Application Publication No. 2011-082979

<u>SUMMARY OF THE INVENTION</u>

<u>PROBLEM TO BE SOLVED BY THE INVENTION</u>

In an LTE system, the same frequency band as a 3G system is used. Also, in an LTE system, a bandwidth of 1.4 MHz, 3 MHz, 5 MHz, 10 MHz, 15 MHz, or 20 MHz can be selected.

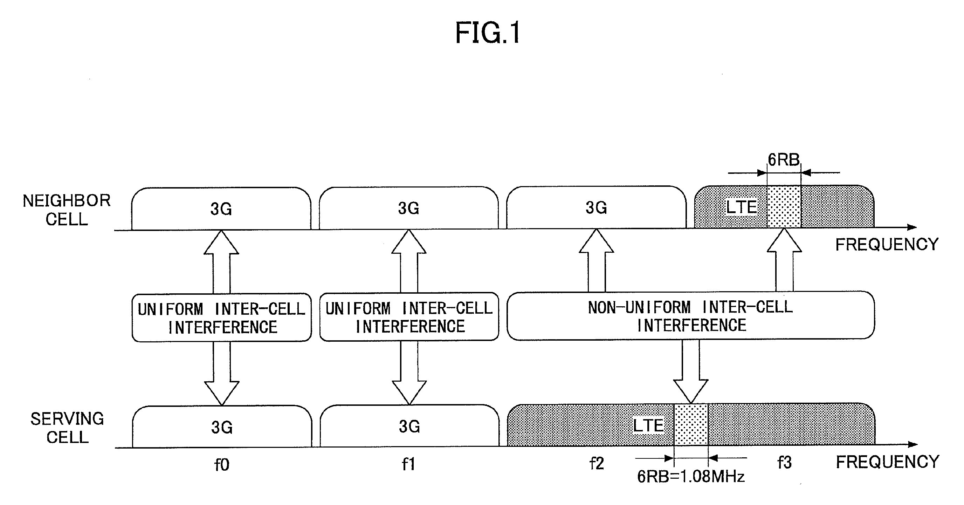

FIG. 1 shows an example of a frequency band usage in a plurality of systems. In FIG. 1, the lower part of the figure shows an example of a frequency band usage in a serving cell, and the upper part of the figure shows an example of a frequency band usage in a neighbor cell.

A 3G system is operated in a frequency band f0, a frequency band f1, and a frequency band f2 of the neighbor cell, and an LTE system is operated in a frequency band f3. Bandwidths of the frequency band f0, the frequency band f1, the frequency band f2 and the frequency band f3 may be all 5 MHz. Also, a case will be discussed in which a system is introduced using 5 MHz bandwidth for each of the frequency band f0 and the frequency band f1 in the serving cell and an LTE system is introduced using 10 MHz bandwidth using the frequency band f2 and the frequency band f3.

A user terminal performs a communication quality measurement of downlink signals from base stations of the LTE system. To be more precise, the user terminal performs the communication quality measurement of the downlink signals from the base stations of the LTE system in at least 6 resource blocks (RBs) that include a central frequency of the allocated frequency band. The reason is that it is specified that regarding the measuring frequency bandwidth of the user terminal, the measurement should be performed in at least 6 RBs. The 6 RBs correspond to 1.08 MHz.

In an example of frequency band usage shown in FIG. 1, the user terminal, which performs communications through the LTE system in the frequency band f2 and the frequency band f3, performs the communication quality measurement in the 6 RBs that include the central frequency of the frequency band that combines the frequency band f2 and the frequency band f3. That is, as a communication quality of the frequency band f2 and the frequency band f3, the communication quality of the 6 RBs that include the central frequency is measured.

Regarding the frequency band f0 and the frequency band f1, because similar systems are operated in the serving cell and the neighbor cell, the inter-cell interference becomes uniform.

However, in the band in which the frequency f2 and the frequency band f3 are added, the inter-cell interference becomes non-uniform because in the serving cell, the LTE system is operated using 10 MHz bandwidth, while in the neighbor cell, the 3G system using 5 MHz bandwidth and the LTE system using 5 MHz bandwidth are operated.

The communication quality measured in 6 RBs including the central frequency of the band in which the frequency band f2 and the frequency band f3 are added often becomes a better value than the actual communication quality. Therefore, in the case where a user terminal, which performs communications in the band in which the frequency band f2 and the frequency band f3 are added, attempts a cell transition by utilizing the communication quality measured in the 6 RBs including the central frequency of the band in which the frequency band f2 and the frequency band f3 are added, the cell transition fails with high probability. To be more precise, in the case where a user terminal, which performs communications in the band in which the frequency band f2 and the frequency band f3 are added, attempts a cell transition by utilizing an RSRQ (Reference Signal Reception Quality) measured in the 6 RBs including the central frequency of the band in which the frequency band f2 and the frequency band f3 are added, the cell transition fails with high probability. Here, the cell transition includes a cell reselection or a handover.

In order to reduce the influence assumed to be introduced in the case where the cell transition is performed utilizing the RSRQ, the following countermeasure can be considered.

It can be considered to utilize an RSRP (Reference Signal Reception Power) instead of an RSRQ as an index used for the cell transition. But, in the case of determining whether a handover should be performed based on the RSRP, interferences from other cells become uncertain in an area where there are many interferences. Therefore, it is assumed that in spite of attempting a handover, the user terminal ends up failing the handover due to the bad radio quality.

Also, it can be considered to switch the cells operating with 5 MHz to the cells operating with 10 MHz. But it takes time to switch all the cells to the ones operating with 10 MHz in all areas. Also, near a country border, because of operators difference there is a possibility that cells operating with 10 MHz and cells operating with 5 MHz co-exist due to the bandwidth difference of the LTE systems being operated, and it will take time to introduce 10 MHz LTE systems in all cells.

It is an object of the present invention, in order to solve the above problems, to provide a technology that can evaluate the radio quality according to the environment.

MEANS FOR SOLVING THE PROBLEM

In order to solve the above problems, a user terminal according to the present invention includes a memory unit configured to store frequency arrangement information that indicates a relationship between a first frequency band used by a user terminal and a second frequency band used by a neighbor cell that is other than a cell communicating with the user terminal, and a cell transition index calculating formula that is used when calculating a cell transition index to be used when determining whether to execute a cell transition in accordance with the frequency arrangement information, a cell transition index calculating unit configured to identify a frequency arrangement based on downlink signals and the frequency arrangement information stored in the memory unit and calculate the cell transition index using the cell transition index calculating formula corresponding to the frequency arrangement, and a cell transition control unit configured to perform cell transition control using the cell transition index calculated by the cell transition calculating unit.

The memory unit may be configured to store, as the frequency arrangement information, the relationship between the second frequency band that is used by at least one of a first communication system and a second communication system of the neighbor cell and the first frequency band that is used by the second communication system used by the user terminal.

A first frequency bandwidth that is used by the first communication system and the second communication system of the neighbor cell may be different from a second frequency bandwidth that is used by the second communication system used by the user terminal.

The memory unit may be configured to include, as the cell transition index calculating formula, a calculating formula including received electric power of downlink signals from a cell communicating with the user terminal and a calculating formula including interference power from the neighbor cell.

The cell transition control unit may be configured to determine whether to perform determination whether to perform a cell re-selection or to send a measurement report depending on whether the user terminal's mode is an idle mode.

The cell transition control unit may be configured to determine whether to perform the cell reselection in the case where the mode of the user terminal is an idle mode, and to determine to send a measurement report in the case where the mode of the user terminal is not an idle mode.

The cell transition control unit may be configured to perform the control of sending the measurement report that includes the cell transition index in the case where it determines to send the measurement report.

A base station of the present invention includes a handover control unit for determining whether to cause the user terminal to perform a handover based on the measurement report from the user terminal and a radio communication unit for sending information to the user terminal to instruct performing a handover, wherein the measurement report is created by the user terminal based on a cell transition index, by identifying a frequency arrangement based on a downlink signal and frequency arrangement information that is stored in a memory unit configured to store the frequency arrangement information that indicates a relationship between a first frequency band used by the user terminal and a second frequency band used by a neighbor cell other than a cell that communicates with the user terminal, and a cell transition index calculating formula that is used when calculating the cell transition index that is used when determining whether to perform a cell transition or not corresponding to the frequency arrangement information; and by calculating the cell transition index using the cell transition index calculating formula corresponding to the frequency arrangement.

Also, the communication control method that the user terminal performs can be configured as a program that the user terminal executes.

Also, the communication control method that the base station performs can be configured as a program that the base station executes.

EFFECT OF THE PRESENT INVENTION

According to the disclosed embodiments of the present invention, it becomes possible to provide a technology that can evaluate the radio quality according to the environment.

BRIEF DESCRIPTION OF THE DRAWINGS

FIG. 1 is a drawing illustrating an example of a frequency band usage in a plurality of systems.
FIG. 2 is a drawing illustrating an embodiment of a radio communication system.
FIG. 3 is a drawing illustrating an embodiment of a UE.
FIG. 4 is a drawing illustrating a detailed example of a frequency band usage in a plurality of systems (No. 1).
FIG. 5 is a drawing illustrating a detailed example of a frequency band usage in a plurality of systems (No. 2).
FIG. 6 is a drawing illustrating a detailed example of a frequency band usage in a plurality of systems (No. 3).
FIG. 7 is a drawing illustrating a detailed example of a frequency band usage in a plurality of systems (No. 4).
FIG. 8 is a drawing illustrating a detailed example of a frequency band usage in a plurality of systems (No. 5).
FIG. 9 is a drawing illustrating a RSRP and a RSRQ.
FIG. 10 is a drawing illustrating a RSSI and a RSCP.
FIG. 11 is a functional block diagram illustrating an embodiment of a UE.
FIG. 12 is a drawing illustrating an embodiment of a BS.
FIG. 13 is a functional block diagram of an embodiment of a BS.
FIG. 14 is a flowchart illustrating an embodiment of an operation of a UE.

EMBODIMENTS FOR CARRYING OUT THE INVENTION

In the following, embodiments of the present invention will be described by referring to the accompanying drawings. Note that the same referral numbers are used throughout the drawings when referring to the same functionalities, and repeated same descriptions are omitted.

<Embodiments>

<Radio communication systems>

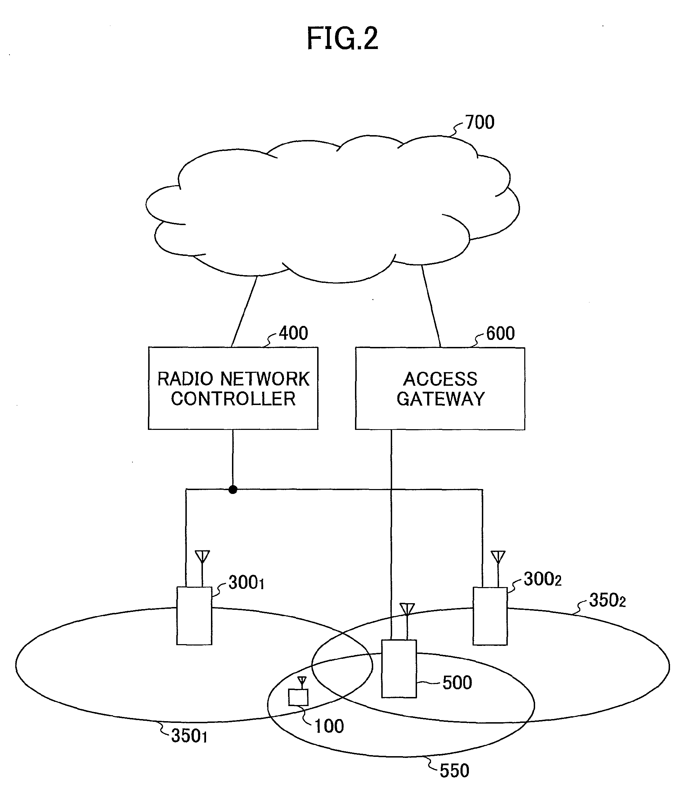

FIG. 2 shows an embodiment of a radio communication system.

In an environment where a radio communication system is applied, a plurality of the radio communication systems coexist. The plurality of radio communication systems include systems performing radio communications with different mobile communication schemes. The mobile communication scheme is sometimes called a radio access technology (RAT). In the RAT specified in the specifications of 3GPP (3rd Generation Partnership Project), LTE (Long Term Evolution), UMTS (Universal Mobile Telecommunications System), and GSM (Global System for Mobile Communications) (registered trade marks) are included. The UMTS is a third generation communication scheme, and the GSM is a second generation communication scheme.

In an embodiment of an environment in which a radio communication system is applied, a system performing a radio communication based on the UMTS (hereinafter referred to as the "first system") and a system performing radio communication base on the LTE (hereinafter referred to as the "second system") are included. The same will be assumed for cases where other systems are included.

The first system includes a user terminal (UE: User Equipment) 100, first BSs (Base Stations) $300_1$ and $300_2$, and an RNC (Radio Network Controller) 400.

The first BSs $300_1$ and $300_2$ are connected to the RNC 400. The RNC 400 is connected to a core network 700.

The first BS $300_1$ covers a cell $350_1$ and the first BS $300_2$ covers a cell $350_2$. The first BSs $300_1$ and $300_2$ perform radio communication with the UE 100 in any of a frequency band f0, a frequency band f1, a frequency band f2 and a frequency band f3 as shown in FIG. 1. That is, the first BSs $300_1$ and $300_2$ perform the radio communication with the UE 100 using 5 MHz band.

The UE 100 performs radio communication by the UMTS scheme with the first BS $300_1$ in the cell $350_1$ and with the first BS $300_2$ in the cell $350_2$.

There is one UE illustrated in FIG. 2, but two or more UEs may be included. Also, in FIG. 2, there are two first BSs $300_1$ and $300_2$ connected to the RNC 400, but only one or more than two first BSs may be connected. Also, there is one RNC 400 illustrated in FIG. 2, but two or more RNCs may be included.

The second system includes a UE 100, a second BS 500 and an access gateway 600.

The second BS 500 is connected to the access gateway 600. The access gateway 600 is connected to a core network 700. The access gateway 600 may be included in the core network 700. The second BS 500 covers a cell 550. The second BS 500 performs, as shown in FIG. 1, radio communication with the UE 100 in any one band of or a plurality of bands of the frequency band f0, the frequency band f1, the frequency band f2 and the frequency band f3. In an embodiment of the second BS 500, a case will be described in which radio communication with the UE 100 is performed in 5 MHz band or 10 MHz band, but any one of 1.4 MHz, 3 MHz, 5 MHz, 10 MHz, 15 MHz and 20 MHz can be selected.

The UE 100 performs radio communication by the LTE scheme with the second BS 500 in the cell 550.

The access gateway 600 is sometimes called a mobility management entity/serving gateway (MME/SGW). In FIG. 2, one second BS 500 is connected to the access gateway 600, but two or more second BSs may be included. Also, in FIG. 2, one access gateway 600 is illustrated, but two or more access gateways may be included.

The UE 100 that can perform communication with the second BS 500 may be able to perform communication with the first BSs $300_1$ and $300_2$. In this case, the UE 100 is sometimes called a dual mode UE. In an embodiment of the UE 100, a case will be described where the UE 100 can perform radio communication with both the first system and the second system.

<UE 100>

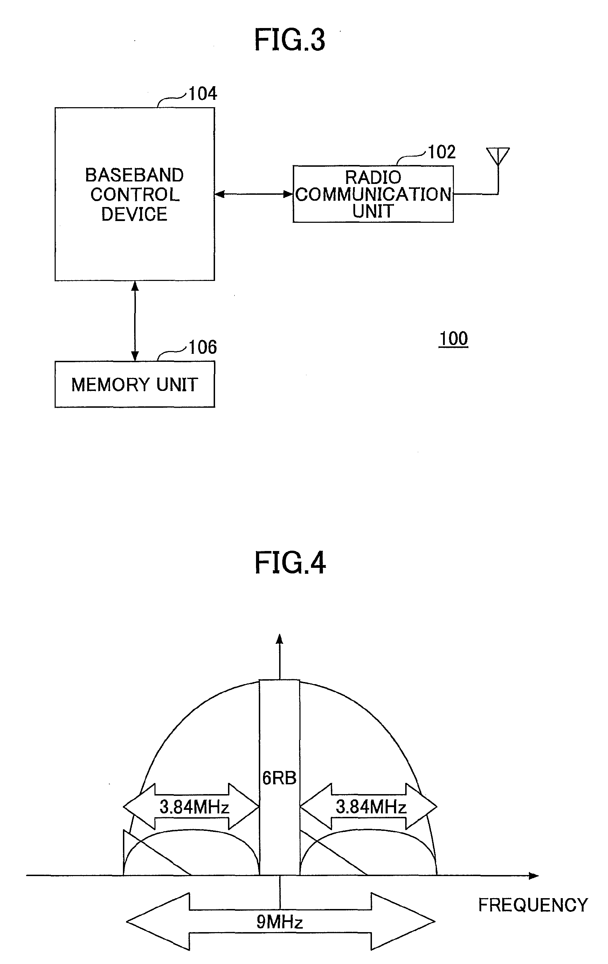

FIG. 3 shows an embodiment of the UE 100.

The UE 100 can perform radio communication with the second BS 500. Also, the UE 100 may be able to perform radio communications with the first BSs $300_1$ and $300_2$. In the case where the UE 100 is able to perform radio communications with the first BSs $300_1$ and $300_2$, the UE 100 may be called a dual mode UE. The dual mode UE is able to perform communications by, for example, the LTE scheme and the UMTS scheme. The UE 100 according to an embodiment can be connected to the first BSs $300_1$ and $300_2$, and the second BS 500.

The UE 100 measures the downlink signals from the serving cell and the downlink signals from surrounding cells other than the serving cell. The surrounding cells include the neighbor cell that is adjacent to the serving cell. The UE 100 may be configured to measure the downlink signals from the serving cell and the downlink signals from the neighbor cell. In the following, as an example, a case will be described where the UE 100 measures the downlink signals from the serving cell and the downlink signals from the neighbor cell. In the downlink signals from the first BSs $300_1$ and $300_2$, a pilot signal (CPICH: Common PIlot CHannel) is included, and in the downlink signals from the second BS 500, a reference signal (RS) is included.

The UE 100, after de-spreading the downlink signals from the first BSs $300_1$ and $300_2$ that were spread for all, performs a communication quality measurement. Also, the UE 100 performs a communication quality measurement for the downlink signals from the second BS 500 in at least 6 resource blocks that include the central frequency of the allocated frequency band.

The UE 100 identifies a frequency arrangement of the serving cell and the neighbor cell based on a measurement result of the downlink signals from the serving cell and a measurement result of the downlink signals from the neighbor cell. Also, the UE 100 may identify the frequency arrangement of the serving cell and the neighbor cell based on notification information from the serving cell and notification information from the neighbor cell.

In an embodiment of the UE 100, based on the identified frequency arrangement, an index that is used at the cell transition (thereinafter, referred to as "cell transition index") is obtained. The UE 100 uses the cell transition index obtained based on the frequency arrangement when it determines whether it performs a cell transition or not.

FIGs. 4 through 8 show examples of the frequency arrangement.

<Frequency arrangement (No.1)>

FIG. 4 shows an example (No.1) of a frequency arrangement in the case where a first system is operated in a neighbor cell.

For example, in an example of the frequency usage shown in FIG. 1, in the serving cell, the frequency band in which the frequency band f1 and the frequency band f2 are added is used by the second system, and in the neighbor cell, the frequency band f1 and the frequency band f2 are used by the first system. In an example shown in FIG. 4, the bandwidth of the first system is shown as 3.84 MHz, and the bandwidth of the second system is shown as 9 MHz.

<Frequency arrangement (No.2)>

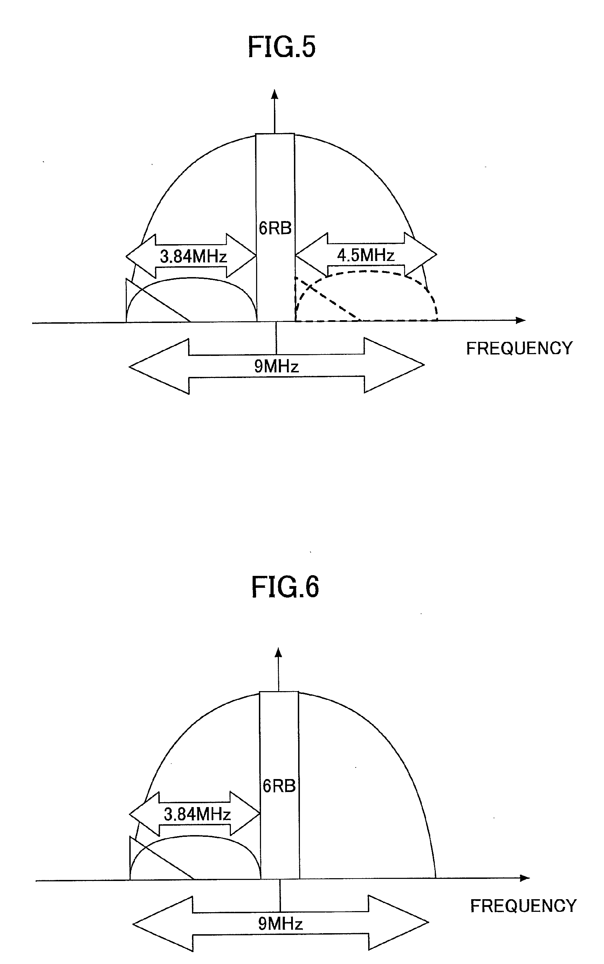

FIG. 5 shows an example (No.2) of a frequency arrangement in the case where a first system and a second system are operated in a neighbor cell.
For example, in an example of a frequency band usage in FIG. 1, in the serving cell, the band in which the frequency band f2 and the frequency band f3 are added is used by the second system, and in the neighbor cell, the frequency band f2 is used by the first system and the frequency band f3 is used by the second system. In an example shown in FIG. 5, the bandwidth of the first system is indicated by 3.84 MHz, and the bandwidths of the second system are indicated by 9 MHz and 4.5 MHz.

<Frequency arrangement (No. 3)>

FIG. 6 shows an example (No. 3) of a frequency arrangement in the case where a first system is operated in a neighbor cell.
For example, in an example of a frequency band usage in FIG. 1, in the serving cell, the band in which the frequency band f2 and the frequency band f3 are added is used by the second system, and in the neighbor cell, the frequency band f2 is used by the first system. In an example shown in FIG. 6, the bandwidth of the first system is indicated by 3.84 MHz and the bandwidth of the second system is indicated by 9 MHz.

<Frequency arrangement (No. 4)>

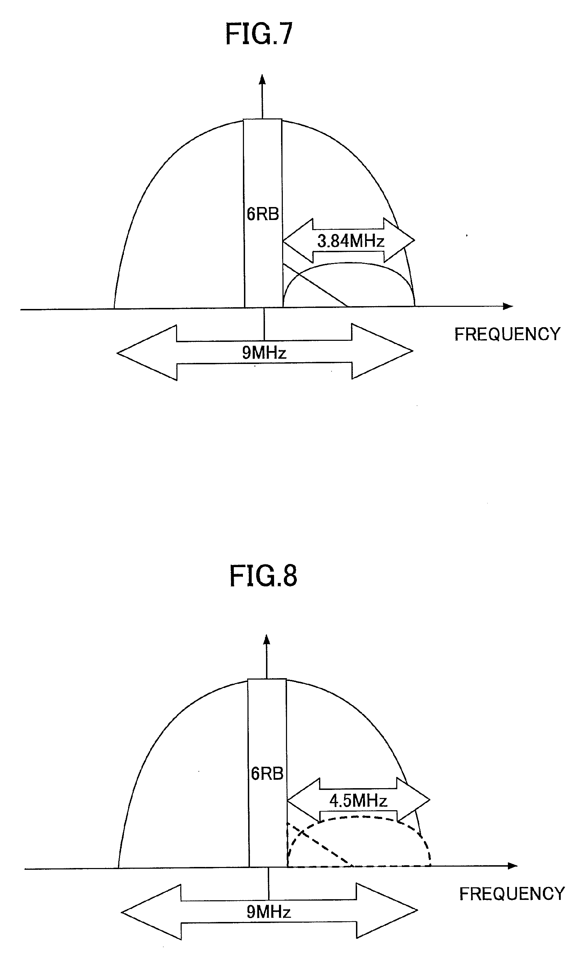

FIG. 7 shows an example (No. 4) of a frequency arrangement in the case where a first system is operated in a neighbor cell.
For example, in an example of a frequency band usage in FIG. 1, in the serving cell, the band in which the frequency band f1 and the frequency band f2 are added is used by the second system, and in the neighbor cell, the frequency band f2 is used by the first system. In an example shown in FIG. 7, the bandwidth of the first system is indicated by 3.84 MHz and the bandwidth of the second system is indicated by 9 MHz.

<Frequency arrangement (No. 5)>

FIG. 8 shows an example (No. 5) of a frequency arrangement in the case where a second system is operated in a neighbor cell.
For example, in an example of a frequency band usage in FIG. 1, in the serving cell, the band in which the frequency band f2 and the frequency band f3 are added is used by the second system, and in the neighbor cell, the frequency band f3 is used by the second system. In an example shown in FIG. 8, the bandwidth of the second system is indicated by 4.5 MHz.
As shown in FIG. 3, the UE 100 includes a radio communication unit 102, a baseband control device 104 and a memory unit 106.
The radio communication unit 102 sends and receives radio signals with the first BS $300_1$, the first BS $300_2$ or the second BS 500. In the downlink radio signals from the first BSs $300_1$ and $300_2$, notification information and a pilot signal are included, and in the downlink radio signals from the second BS 500, notification information and a reference signal are included. The radio communication unit 102 inputs received signals from the first BS $300_1$, the first BS $300_2$ or the second BS 500 to the baseband control device 104.
The baseband control device 104 performs the control for processing baseband signals according to the program stored in the memory unit 106. The baseband control device 104 is connected to the radio communication unit 102. The baseband control device 104, based on the received signals from the radio communication unit 102, identifies the corresponding frequency arrangement from the <frequency arrangement (No. 1)> through the <frequency arrangement (No. 5)> described above.
The baseband control device 104, according to the frequency arrangement identified from the <frequency arrangement (No. 1)> through the <frequency arrangement (No. 5)>, calculates a cell transition index that is used at a cell transition. When calculating the cell transition index, the baseband control device 104 uses a calculating formula to be used at the time of calculating the cell transition index (thereinafter, referred to as "cell transition index calculating formula") according to the frequency arrangement identified from the <frequency arrangement (No. 1)> through the <frequency arrangement (No. 5)>. The baseband control device 104 uses the cell transition index when it determines whether it performs the cell transition or not.
The memory unit 106 is connected to the baseband control device 104. In the memory unit 106, applications and an OS (Operating System) are stored. The applications are software that has functions for processing tasks that a user does on the UE. The operating system is software that provides application software with abstracted hardware interfaces in the UE 100.

Also, in the memory unit 106, the cell transition index calculating formulas are stored. To be more precise, in the memory unit 106, the cell transition index calculating formulas are stored corresponding to the <frequency arrangement (No. 1)> through the <frequency arrangement (No. 5)>.

<Cell transition calculating formula (No. 1)>

In the memory unit 106, a formula (1) and a formula (2) are stored as cell transition calculating formulas corresponding to the <frequency arrangement (No. 1)>. The <frequency arrangement (No. 1)> corresponds to a case where a first system exists in a neighbor cell. The formula (1) is a cell transition index calculating formula in which the calculation is based on received power according the configuration of the neighbor cell. In the cell transition index calculating formula in which the calculation is based on the received power, interference power corresponding to the neighbor cell and noise are subtracted from the received power. The formula (2) is a cell transition index calculating formula in which the calculation is based on interference power according the configuration of the neighbor cell. In the cell transition index calculating formula in which the calculation is based on the interference power, interference power corresponding to the neighbor cell and noise are subtracted from the interference power.

[Mathematical expression 1]

$$J(dBm) = Power_{serving} - (10\log(\sum 10^{(UMTS_{interference1}-30)\times 0.1}) + 3 + Noise_1) \quad (1)$$

In the formula (1), $Power_{serving}$ (received power of downlink signals from the serving BS), $UMTS_{interference1}$ (interference power from the first system) and $Noise_1$ (noise) are calculated by the following formulas.

$$Power_{serving}(dBm) = 10\log(RSRP_{serving} * number\ of\ subcarriers)$$

$$UMTS_{interference1}(dBm) = TOTAL_{TransmitPower} - (CPICH_{TransmitPower} - RSCP)$$

$RSRP_{serving}$ is an RSRP corresponding to the serving BS. $TOTAL_{TransmitPower}$ is a total transmit power. $CPICH_{TransmitPower}$ is a transmit power in a pilot channel. RSCP (Received signal Code Power) is received power of desired wave.

$Noise_1(dBm) = -174 + 10\log(15000 * number\ of\ serving\ subcarriers)$

Here, the noise that exists in nature is, with a true value calculation, -174 dBm. The $Noise_1$ can be obtained by adding -174 dBm and a logarithm of the product of the subcarrier bandwidth and the number of subcarriers that are used for the radio communication.

Regarding the number of subcarriers, in the case where the 5 MHz band is used, it is 300 subcarriers, in the case of 10 MHz, it is 450 subcarriers, in the case of 15 MHz, it is 600 subcarriers, and in the case of 20 MHz, it is 750 subcarriers.

[Mathematical expression 2]

$$I(dBm) = RSRP_{serving} - (10\log(\sum 10^{(UMTS_{interference2}-30)\times 0.1}) + 3 + Noise_2) \quad (2)$$

$$Noise_2(dBm) = -174 + 10\log(15000)$$

$$UMTS_{interference2}(dBm) = TOTAL_{TransmitPower} - (CPICH_{TransmitPower} - RSCP) - 10\log(256)$$

<Cell transition calculating formula (No. 2)>

In the memory unit 106, a formula (3) and a formula (4) are stored as a cell transition calculating formula corresponding to the <frequency arrangement (No. 2)>. The <frequency arrangement (No. 2)> corresponds to a case where a first system and a second system exist in a neighbor cell. The formula (3) is a cell transition index calculating formula in which the calculation is based on received power according the configuration of the neighbor cell. In the cell transition index calculating formula in which the calculation is based on the received power, the average of the received power corresponding to the neighbor cell and the interference power corresponding to the neighbor cell and noise are subtracted from the received power. The formula (4) is a cell transition index calculating formula in which the calculation is based on interference power according the configuration of the neighbor cell. In the cell transition index calculating formula in which the calculation is based on the interference power, the average of the received power corresponding to the neighbor cell and the interference power corresponding to the neighbor cell and noise are subtracted from the interference power.

$$M(dBm) = Power_{serving} - (Ave_1 + Noise_1) \qquad (3)$$

In the formula (3), the $Power_{serving}$ (received power of downlink signals from the serving BS), the $Ave_1$ (average) and the $Noise_1$ (noise) are calculated by the following formulas.

$$Power_{serving}(dBm) = 10\log(RSRP_{serving} * number\ of\ subcarriers)$$

$RSRP_{serving}$ is an RSRP corresponding to the serving BS.
[Mathematical expression 3]

$$Ave_1(dBm) = 10\log((\sum 10^{(Power_{neighbor} - 30) \times 0.1} + \sum 10^{(UMTS interference_1 - 30) \times 0.1})/2)$$

$Power_{neighbor}$ is received power of downlink signals from the neighbor cell.
$UMTS_{interference1}$ is interference power from the first system.

$$Noise_1(dBm) = -174 + 10\log(15000 * number\ of\ serving\ subcarriers)$$

$$Power_{neighbor}(dBM) = 10\log(RSRP_{neighbor} * number\ of\ subcarriers)$$

$$UMTS_{interference1}(dBm) = TOTAL_{TransmitPower} - (CPICH_{TransmitPower} - RSCP)$$

$$N(dBm) = RSRP_{serving} - (Ave_2 + Noise_2) \qquad (4)$$

In the formula (4), $RSRP_{serving}$ (RSRP corresponding to the serving BS), $Ave_2$(average) and $Noise_2$(noise) are calculated by the following formulas.

[Mathematical expression 4]

$$Ave_1(dBm) = 10\log\left(\left(\sum 10^{(RSRP_{neighbor}-30)\times0.1} + \sum 10^{(UMTS_{interference1}-30)\times0.1}\right)/2\right)$$

$RSRP_{neighbor}$ is an RSRP corresponding to the serving BS. $UMTS_{interference1}$ is interference power from the first system.

$$Noise_2(dBm) = -174 + 10\log(15000)$$

$$UMTS_{interference2}(dBm) = TOTAL_{TransmitPower} - (CPICH_{TransmitPower} - RSCP) - 10\log(256)$$

<Cell transition calculating formula (No. 3)>

In the memory unit 106, a formula (5) and a formula (6) are stored as a cell transition calculating formula corresponding to the <frequency arrangement (No. 3)>. The <frequency arrangement (No. 3)> corresponds to a case where a first system exists in a neighbor cell. The formula (5) is a cell transition index calculating formula in which the calculation is based on received power according the configuration of the neighbor cell. In the cell transition index calculating formula in which the calculation is based on the received power, the interference power corresponding to the neighbor cell and noise are subtracted from the received power. The formula (6) is a cell transition index calculating formula in which the calculation is based on interference power according the configuration of the neighbor cell. In the cell transition index calculating formula in which the calculation is based on the interference power, the interference power corresponding to the neighbor cell and noise are subtracted from the interference power.
[Mathematical expression 5]

$$J(dBm) = Power_{serving} - \left(10\log\left(\sum 10^{(UMTS_{interference1}-30)\times0.1}\right) + Noise_1\right) \qquad (5)$$

In the formula (5), $Power_{serving}$, $UMTS_{interference1}$ and $Noise_1$ are calculated by the following formulas.

$$Power_{serving}(dBm) = 10\log(RSRP_{serving} * number\ of\ subcarriers)$$

$$\text{UMTS}_{\text{interference1}}(\text{dBm}) = \text{TOTAL}_{\text{TransmitPower}} - (\text{CPICH}_{\text{TransmitPower}} - \text{RSCP})$$

$$\text{Noise}_1(\text{dBm}) = -174 + 10\log(15000 * \text{number of serving subcarriers})$$

Regarding the number of subcarriers, in the case where the 5 MHz band is used, it is 300 subcarriers, in the case of 10 MHz, it is 450 subcarriers, in the case of 15 MHz, it is 600 subcarriers, and in the case of 20 MHz, it is 750 subcarriers.

[Mathematical expression 6]

$$I(dBm) = RSRP_{serving} - (10\log(\sum 10^{(UMTS_{interference2}-30)\times 0.1}) + Noise_2) \qquad (6)$$

$$\text{Noise}_2(\text{dBm}) = -174 + 10\log(15000)$$

$$\text{UMTS}_{\text{interference2}}(\text{dBm}) = \text{TOTAL}_{\text{TransmitPower}} - (\text{CPICH}_{\text{TransmitPower}} - \text{RSCP}) - 10\log(256)$$

<Cell transition calculating formula (No. 4)>

In the memory unit 106, a formula (7) and a formula (8) are stored as a cell transition calculating formula corresponding to the <frequency arrangement (No. 4)>. The <frequency arrangement (No. 4)> corresponds to a case where a first system exists in a neighbor cell. The formula (7) is a cell transition index calculating formula in which the calculation is based on received power according the configuration of the neighbor cell. In the cell transition index calculating formula in which the calculation is based on the received power, the interference power corresponding to the neighbor cell and noise are subtracted from the received power. The formula (8) is a cell transition index calculating formula in which the calculation is based on interference power according the configuration of the neighbor cell. In the cell transition index calculating formula in which the calculation is based on the interference power, the interference power corresponding to the neighbor cell and noise are subtracted from the interference power.

[Mathematical expression 7]

$$J(dBm) = Power_{serving} - (10\log(\sum 10^{(UMTS_{interference1}-30)\times 0.1}) + Noise_1) \qquad (7)$$

In the formula (7), $Power_{serving}$, $UMTS_{interference1}$ and $Noise_1$ are calculated by the following formulas.

$$\text{Power}_{\text{serving}}(\text{dBm}) = 10\log(\text{RSRP}_{\text{serving}} * \text{number of subcarriers})$$

$$UMTS_{interference1}(dBm)=TOTAL_{TransmitPower}-$$
$$(CPICH_{TransmitPower}-RSCP)$$

$$Noise_1(dBm)=-174+ 10log(15000*number\ of$$
$$serving\ subcarriers)$$

Regarding the number of subcarriers, in the case where the 5 MHz band is used, it is 300 subcarriers, in the case of 10 MHz, it is 450 subcarriers, in the case of 15 MHz, it is 600 subcarriers, and in the case of 20 MHz, it is 750 subcarriers.
[Mathematical expression 8]

$$I(dBm)= RSRP_{serving} - (10\log(\sum 10^{(UMTS_{interference2}-30)\times0.1})+ Noise_2)\quad(8)$$

$$Noise_2(dBm)=-174+10log(15000)$$

$$UMTS_{interference2}(dBm)=TOTAL_{TransmitPower}-$$
$$(CPICH_{TransmitPower}-RSCP)-10log(256)$$

<Cell transition calculating formula (No. 5)>

In the memory unit 106, a formula (9) and a formula (10) are stored as a cell transition calculating formula corresponding to the <frequency arrangement (No. 5)>. The <frequency arrangement (No. 4)> corresponds to a case where a second system exists in a neighbor cell. The formula (9) is a cell transition index calculating formula in which the calculation is based on received power according the configuration of the neighbor cell. In the cell transition index calculating formula in which the calculation is based on the received power, the received power corresponding to the neighbor cell and noise are subtracted from the received power. The formula (10) is a cell transition index calculating formula in which the calculation is based on interference power according the configuration of the neighbor cell. In the cell transition index calculating formula in which the calculation is based on the interference power, the interference power corresponding to the neighbor cell and noise are subtracted from the interference power.
[Mathematical expression 9]

$$H(dBm)= Power_{serving} - (10\log(\sum 10^{(Power_{neighbor}-30)\times0.1})+ Noise_1)\quad(9)$$

In the formula (9), $Power_{serving}$, $Power_{neighbor}$ (received power of the downlink signals from the neighbor BS) and $Noise_1$ are calculated by the following formulas.

$$Power_{serving}(dBm)=10log(RSRP_{serving}*$$
$$number\ of\ subcarriers)$$

$$\mathrm{Power_{neighbor}(dBm)=10log(RSRP_{neighbor}*}$$
$$\mathrm{number\ of\ subcarriers)}$$

$RSRP_{serving}$ is an RSRP corresponding to the serving BS. $RSRP_{neighbor}$ is an RSRP corresponding to the neighbor BS.

$$\mathrm{Noise_1(dBm)=-174+\ 10log(15000*number\ of}$$
$$\mathrm{serving\ subcarriers)}$$

[Mathematical expression 10]

$$L(dBm) = RSRP_{serving} - (10\log(\sum 10^{(RSRP_{neighbor}-30)\times0.1}) + Noise_2) \qquad (10)$$

In the formula (10), $Noise_2$ is calculated by the following formula.

$$\mathrm{Noise_2(dBm)=-174+10log(15000)}$$

Regarding the number of subcarriers, in the case where the 5 MHz band is used, it is 300 subcarriers, in the case of 10 MHz, it is 450 subcarriers, in the case of 15 MHz, it is 600 subcarriers, and in the case of 20 MHz, it is 750 subcarriers.

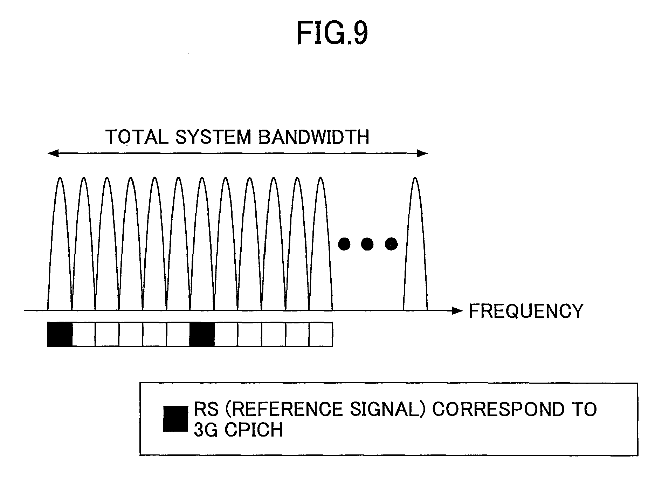

FIG. 9 shows a reference signal. In FIG. 9, the horizontal axis is frequency. RSRP is a received power per subcarrier of RSs over the total system bandwidth. The RSRQ is represented by RSRP*number of RBs(Resource Blocks)/RSSI.

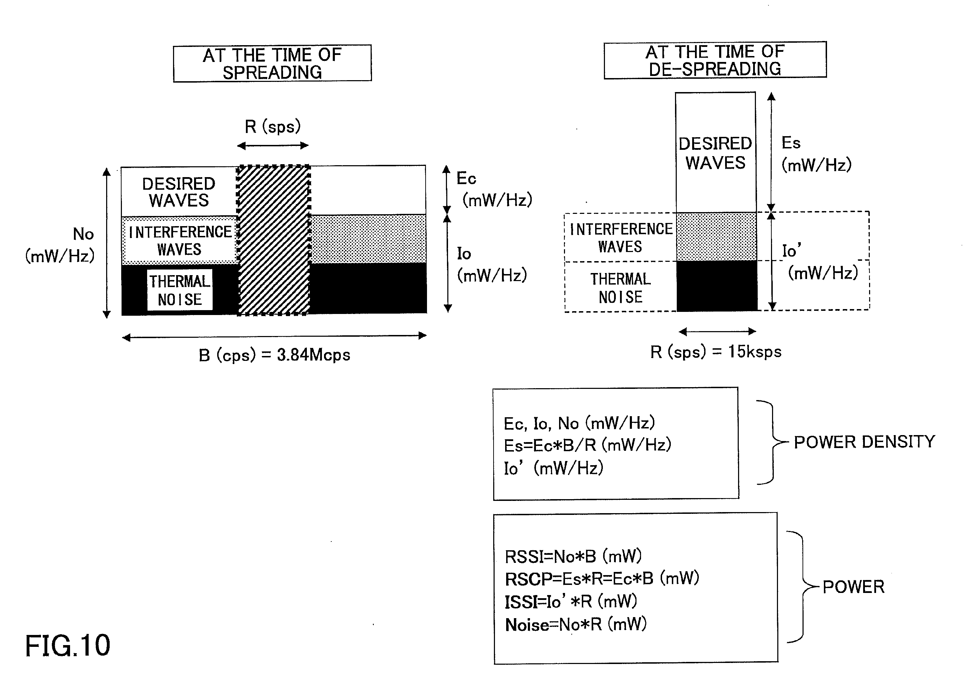

FIG. 10 illustrates RSSI and RSCP.

In FIG. 10, desired waves, interference waves and thermal noise at the time of spreading and desired waves, interference waves and thermal noise at the time of de-spreading are illustrated.

Ec (mW/Hz) is a power density for the desired waves at the time of spreading, and Io (mW/Hz) is a power density for the interference waves and the thermal noise combined together at the time of spreading. No (mW/Hz) is a power density of the desired waves, the interference waves and the thermal noise combined together. B (cps) is 3.84 Mcps and R (sps) is 15 ksps.

Es (mW/Hz) is a power density for the desired waves at the time of de-spreading, and Io' (mW/Hz) is a power density of the interference waves and the thermal noise combined together at the time of de-spreading.

Es (mW/Hz) is represented by Ec*B/R (mW/Hz). RSSI (mW) is represented by No*B (mW). RSCP (mW) is represented by Es*R=Ec*B (mW). ISSI (mW) is represented by Io'*R (mW). Noise is represented by No*R (mW).

The radio communication unit 102 measures communication quality of the downlink signals from the first BS $300_1$, the first BS $300_2$ and the second BS 500 at the time of a cell search. To be more precise, the radio communication unit 102 may measure an RSRP (Reference Signal Received Power), an RSRQ (Reference Signal Received Quality) and an RSSI (Received Signal Strength Indicator) based on downlink signals from the second BS 500.

<Functions of the UE 100>

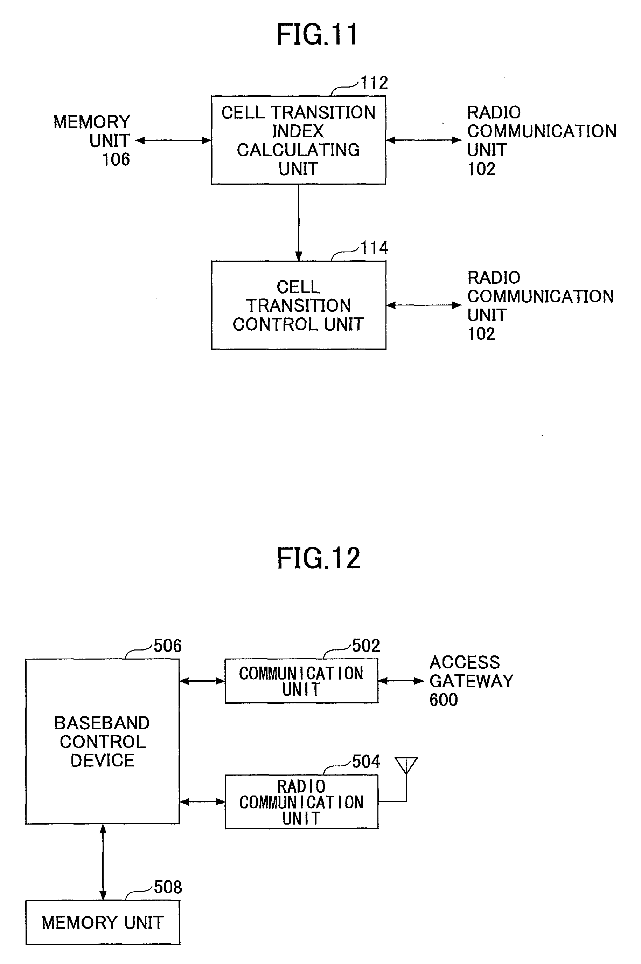

FIG. 11 is an embodiment of functions of the UE 100. In FIG. 11, functions are shown which are executed by a CPU (not shown in the figure) included in the baseband control device 104 according to a program stored in the memory unit 106.

The functions performed by the baseband control device 104 include those of a cell transition index calculating unit 112 and a cell transition control unit 114.

To the cell transition index calculating unit 112, information indicating a serving cell and information indicating a neighbor cell are inputted from the radio communication unit 102. To be more precise, information indicating the serving cell based on the measurement result of the downlink signals from the serving cell and information indicating the neighbor cell based on the measurement result of the downlink signals from the neighbor cell may be inputted. Also, information indicating the serving cell included in the notification information of the serving cell and information indicating the neighbor cell included in the notification information from the neighbor cell may be inputted. The cell transition index calculating unit 112 indentifies the corresponding frequency arrangement from the <frequency arrangement (No. 1)> through the <frequency arrangement (No. 5)> described above based on the information indicating the serving cell and the information indicating the neighbor cell from the radio communication unit 102. The cell transition index calculating unit 112 calculates the cell transition index using a cell transition calculating formula corresponding to the identified frequency arrangement from the <cell transition calculating formula (No. 1)> through the <cell transition calculating formula (No. 5)> stored in the memory unit 106. The cell transition index calculating unit 112 inputs the cell transition index to the cell transition control unit 114.

The cell transition control unit 114 is connected to the cell transition index calculating unit 112. The cell transition control unit 114 determines whether to perform a cell transition using the cell transition index from the cell transition index calculating unit 112. The cell transition control unit 114 performs the control of the cell transition in the case where it determines to perform the cell transition. To be more precise, the cell transition control unit 114 determines whether to perform the cell reselection or not. The cell transition control unit 114 performs the control of the cell reselection in the case where it determines to perform the cell reselection.

Also, the cell transition control unit 114 performs the control of a handover execution according to a handover instruction from the first BS $300_2$ or the second BS 500. To be more precise, the cell transition control unit 114 performs the control of sending a measurement report to the first BS $300_1$, the first BS $300_2$, or the second BS 500. The measurement report may include the cell transition index. Also, a new index calculated based on the cell transition index may be included in the measurement report.

<The second BS 500>

FIG. 12 shows an embodiment of the second BS 500.

The second BS 500 is connected to an access gateway 600. The second BS 500 includes a communication unit 502, a radio communication unit 504, a baseband control device 506 and a memory unit 508.

The communication unit 502 is connected to the access gateway 600. The communication unit 502 sends and receives signals with the access gateway 600. Signals from the access gateway 600 may include information received from BSs other than the second BS 500 through the S1 interface. Also, the communication unit 502 may send signals to the access gateway 600 through the S1 interface.

The radio communication unit 504 sends a reference signal from the baseband control device 506 and information instructing a handover to the served UEs. The radio communication unit 504 may send notification information from the baseband control device 506 to the served UEs. Also, the radio communication unit 504 receives a measurement report from the UE 100.

The baseband control device 506 is connected to the communication unit 502 and the radio communication unit 504. The baseband control device 506 performs control of processing baseband signals according to a program stored in the memory unit 508.

The baseband control device 506 determines whether to cause the UE 100 to perform a handover or not based on the measurement report from the UE 100. In the measurement report, a cell transition index calculated by the UE 100 may be included. Also, in the measurement report, a new index calculated based on the cell transition index may be included. In the case of determining to cause the UE 100 to perform a handover, the baseband control device 506 inputs information instructing performing a handover to the radio communication unit 504. The radio communication unit 504 sends information instructing performing a handover from the baseband control device 506 to the UE 100.

The memory unit 508 is connected to the baseband control device 506. In the memory unit 508, applications and an OS are stored. The applications are software that includes functions for processing tasks that a worker does on the second BS 500. The Operating System is software that provides the application software with abstracted hardware interfaces in the second BS 500.

<Functions of the second BS 500>

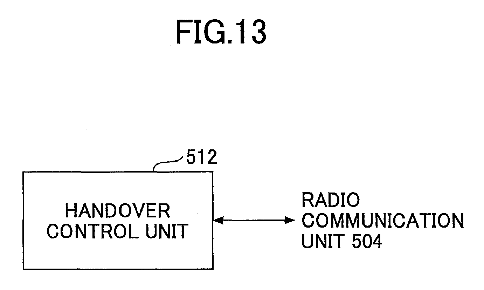

FIG. 13 shows an embodiment of functions of the second BS 500. In FIG. 13, functions that are executed by the baseband control device 506 according to a program stored in the memory unit 508 are shown.

The functions executed by the baseband control device 506 include those of a handover control unit 512.

To the handover control unit 512, a measurement report from the radio communication unit 504 is inputted. The handover control unit 512 determines whether to cause the UE 100 to perform a handover or not. The handover control unit 512 inputs a signal for instructing performing a handover to the radio communication unit 504 in the case of determining to cause the UE 100 to perform a handover.

<Operations of the UE 100>

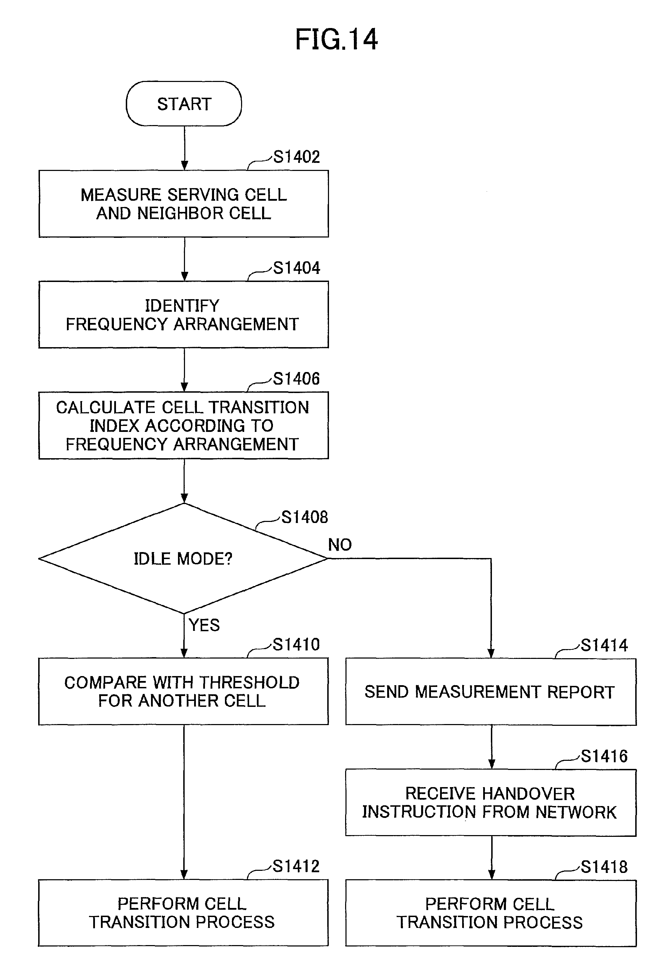

FIG. 14 shows an embodiment of the operations of the UE 100.

In step S1402, the radio communication unit 102 measures the serving cell and the neighbor cell. The radio communication unit 102 establishes synchronization with the serving cell and the neighbor cell and receives notification information from the serving cell and notification information from the neighbor cell. Also, the radio communication unit 102 receives a reference signal from the serving cell and a pilot signal from the neighbor cell. The radio communication unit 102 measures the reference signal from the serving cell and the pilot signal from the neighbor cell.

In step S1404, the cell transition index calculating unit 112 identifies a frequency arrangement based on the serving cell and the neighbor cell measured in step S1402. The cell transition index calculating unit 112 identifies the frequency arrangement based on information indicating a system of the serving cell included in notification information from the serving cell, a measurement result of the reference signal, information indicating a system of the neighbor cell included in a notification information from the neighbor cell and a measurement result of the pilot signal. The information indicating the system of the serving cell may include information indicating the frequency band used by the serving cell. The information indicating the system of the neighbor cell may include information indicating the frequency band used by the neighbor cell.

In step S1406, the cell transition index calculating unit 112 calculates a cell transition index according to the frequency arrangement identified in step S1404. The measurement result of the reference signal from the serving cell and the measurement result of the pilot signal of the neighbor cell are used when the cell transition index is calculated.

In step S1408, The cell transition control unit 114 determines whether the operation mode of the UE 100 is an idle mode.

In step S1410, in the case where the operation mode of the UE 100 is an idle mode, the cell transition control unit 114 compares the cell transition index with a threshold value for another cell. That is, the cell transition control unit 114 compares the cell transition index calculated in step S1406 with the threshold value used when moving to another cell. To be more precise, the cell transition control unit 114 determines whether the cell transition index is equal to or higher than the threshold value.

In step S1412, the cell transition control unit 114 performs the cell transition process based on the comparison result with the threshold value for another cell. To be more precise, the cell transition control unit 114 performs a cell reselection process. The cell transition control unit 114 may perform the cell reselection process in the case where the cell transition index is less than the threshold value. The reason is that in the case where the cell transition index is less than the threshold value, it is assumed that the communication quality is not good. The cell transition control unit 114 may be configured not to perform the cell reselection in the case where the cell transition index is equal to or more than the threshold value. The reason is that in the case where the cell transition index is equal to or more than the threshold value, it is assumed that the communication quality is good.

In step S1414, in the case where the operation mode of the UE 100 is not determined to be an idle mode, the cell transition control unit 114 performs control of sending a measurement report. The cell transition control unit 114 may perform control of sending a measurement report that includes a cell transition index. Also, the cell transition control unit 114 may perform control of sending a measurement report that includes a new index calculated based on the cell transition index.

In step S1416, the cell transition control unit 114 receives a handover instruction from the network. In this case, the second BS 500 determines whether to cause the UE 100 to perform a handover based on the measurement report from the UE 100. In this case, the second BS 500 determines to cause the UE 100 to perform a handover and sends information for instructing performing a handover to the UE 100.

In step S1418, the cell transition control unit 114 performs a cell transition process according to the handover instruction. To be more precise, the cell transition control unit 114 performs the handover process.

According to the present embodiment, a calculation formula used for calculating an index used for a cell transition is prepared in accordance with a frequency arrangement of the neighbor cell. The calculation formula used for calculating the index used for the cell transition is based on received power and interference power. Regarding the calculation formula, it is easy to apply because it uses the measurement value. Regarding the calculation formula, because it is based on interference power, the influence of interference from other cells, which is a problem for RSRP, can be reduced. To be more precise, the RSRP becomes approximately the same value regardless of whether it is measured in the 6 RBs including the center frequency of the allocated band or it is measured in all of the band of the allocated band. That is, it becomes approximately a constant value regardless of the bandwidth measured. Therefore, it can reduce the influence of the changing interference from other cells depending on the bandwidth measured, which is a problem for RSRQ.

Because it can reduce the influence of the interference from other cells, it can realize a handover or a cell reselection at a constant place. Because of this, it can reduce the case in which a handover is performed after the communication quality becomes bad. That is, it can indicate the possibility that the communication quality becomes bad before the quality becomes bad, and it can facilitate a handover or a cell reselection to the best cell.

Because calculation formulas that are used for calculating an index used for a cell transition are prepared, the radio quality evaluation in accordance with the environment can be achieved. Because an index used for a cell transition can be calculated by using calculating formulas in accordance with the neighbor cells, possibility of failure of an inter-RAT handover can be reduced.

For the sake of convenience, the present embodiments are described using specific numbers in order to facilitate understanding of the invention, but these numbers are used just as examples and, unless otherwise noted, any appropriate number can be used.

A UE, a BS, and a communication control method have been described according to the embodiments, but the present invention is not limited to the above embodiments, and various modifications and refinements may be made without departing from the scope of the present invention. For the sake of convenience, devices of the present embodiments are described using a functional block diagram, but those devices may be realized as hardware, software, or a combination of both.

The present application is based on and claims the benefit of priority of Japanese Priority Application No. 2011-286882 filed on December 27, 2011 the entire contents of which are hereby incorporated by reference.

DESCRIPTION OF THE REFERENCE NUMERALS

| | |
|---|---|
| 100 | UE |
| 102 | Radio communication unit |
| 104 | Baseband control device |
| 106 | Memory unit |
| 112 | Cell transition index calculating unit |
| 114 | Cell transition control unit |
| $300_1$, $300_2$ | First BS |
| $350_1$, $350_2$ | Cell |
| 400 | RNC |
| 500 | Second BS |
| 502 | Communication unit |
| 504 | Radio communication unit |
| 506 | Baseband control device |
| 508 | Memory unit |
| 512 | Handover control unit |
| 550 | Cell |
| 600 | Access gateway |
| 700 | Core network |

**Claims**

1.  A user terminal comprising:

    a memory unit configured to store
    frequency arrangement information indicating a relationship between a first frequency band that is used by the user terminal and a second frequency band that is used by a neighbor cell other than a cell that communicates with the user terminal and
    a cell transition index calculating formula that is used when calculating a cell transition index that is used when determining whether a cell transition is to be performed or not according to the frequency arrangement information,
    a cell transition index calculating unit configured to
    identify a frequency arrangement based on a downlink signal and the frequency arrangement information stored in the memory unit, and to
    calculate the cell transition index according to the cell transition index calculating formula corresponding to the frequency arrangement, and

a cell transition control unit configured to perform cell transition control using the cell transition index calculated by the cell transition calculating unit.

2. The user terminal as claimed in claim 1, wherein in the memory unit, as the frequency arrangement information, a relationship between the second frequency band that is used by at least one of a first communication system and a second communication system of the neighbor cell and the first frequency band that is used by the second communication system used by the user terminal is stored.

3. The user terminal as claimed in claim 1, wherein a first frequency bandwidth used by a first communication system and a second communication system of the neighbor cell is different from a second frequency bandwidth used by the second system that is used by the user terminal.

4. The user terminal as claimed in claim 1, wherein in the memory unit, as the cell transition index calculating formula, a formula including received power of downlink signals from the cell that communicates with the user terminal and a formula including interference power from the neighbor cell are included.

5. The user terminal as claimed in claim 1, wherein the cell transition control unit determines whether
to perform determination whether to perform a cell reselection or not, or
to send a measurement report according to whether a mode of the user terminal is an idle mode or not.

6. The user terminal as claimed in claim 5, wherein the cell transition control unit determines whether to perform the cell reselection or not in the case where the mode of the user terminal is the idle mode, and determines to send the measurement report in the case where the mode of the user terminal is not the idle mode.

7. The user terminal as claimed in claim 6, wherein the cell transition control unit performs control of sending the measurement report including the cell transition index in the case where it is determined to send the measurement report.

8. A base station comprising:

a handover control unit configured to determine, according to a measurement report from a user terminal, whether to cause the user terminal to perform a handover or not, and
a radio communication unit configured to send information to the user terminal for instructing performing the handover in the case where it is determined to cause the user terminal to perform the handover by the handover control unit, wherein the measurement report is created by the user terminal based on a cell transition index, by identifying a frequency arrangement based on
a downlink signal and
frequency arrangement information that is stored in a memory unit configured to store
the frequency arrangement information that indicates a relationship between a first frequency band used by the user terminal and a second frequency band used by a neighbor cell other than a cell that communicates with the user terminal, and
a cell transition index calculating formula that is used when calculating the cell transition index that is used when determining whether to perform a cell transition or not corresponding to the frequency arrangement information; and
by calculating the cell transition index using the cell transition index calculating formula corresponding to the frequency arrangement.

9. A communication control method in a user terminal comprising:

a cell transition index calculating step of
identifying a frequency arrangement based on
a downlink signal and
frequency arrangement information stored in a memory unit configured to store
the frequency arrangement information that indicates a relationship between a first frequency band used by the user terminal and a second frequency band used by a neighbor cell other than a cell that communicates with the user terminal and
a cell transition index calculating formula that is used when calculating a cell transition index that is used when determining whether to perform a cell transition or not corresponding to the frequency arrangement information, and of
calculating the cell transition index using the cell transition index calculating formula corresponding to the frequency arrangement; and
a cell transition control step of performing cell transition control using the cell transition index calculated by the cell transition calculating step.

10. A communication control method in a base station comprising:

a handover control step of, according to a measurement report from a user terminal, determining whether to cause the user terminal to perform a handover or not, and
a radio communication step of sending information to the user terminal for instructing performing a handover in the case where it is determined to cause the user terminal to perform a handover by the handover control step, wherein the measurement report is created by the user terminal based on a cell transition index,
by identifying a frequency arrangement based on
a downlink signal and
frequency arrangement information that is stored in a memory unit configured to store
the frequency arrangement information that indicates a relationship between a first frequency band used by the user terminal and a second frequency band used by a neighbor cell other than a cell that communicates with the user terminal and
a cell transition index calculating formula that is used when calculating the cell transition index that is used when determining whether to perform a cell transition or not corresponding to the frequency arrangement information; and
by calculating the cell transition index using the cell transition index calculating formula corresponding to the frequency arrangement.

# FIG.1

# FIG.2

# FIG.3

# FIG.4

## FIG.5

3.84MHz  6RB  4.5MHz

9MHz

FREQUENCY

## FIG.6

3.84MHz  6RB

9MHz

FREQUENCY

## FIG.7

6RB

3.84MHz

9MHz

FREQUENCY

## FIG.8

6RB

4.5MHz

9MHz

FREQUENCY

# FIG.9

TOTAL SYSTEM BANDWIDTH

FREQUENCY

RS (REFERENCE SIGNAL) CORRESPOND TO 3G CPICH

## AT THE TIME OF SPREADING

R (sps)

$$No \; (mW/Hz)$$

DESIRED WAVES

INTERFERENCE WAVES

THERMAL NOISE

$$Ec \; (mW/Hz)$$

$$Io \; (mW/Hz)$$

B (cps) = 3.84Mcps

## AT THE TIME OF DE-SPREADING

DESIRED WAVES

$$Es \; (mW/Hz)$$

INTERFERENCE WAVES

THERMAL NOISE

$$Io' \; (mW/Hz)$$

R (sps) = 15ksps

$Ec, Io, No \; (mW/Hz)$
$Es = Ec*B/R \; (mW/Hz)$
$Io' \; (mW/Hz)$

}— POWER DENSITY

$RSSI = No*B \; (mW)$
$RSCP = Es*R = Ec*B \; (mW)$
$ISSI = Io'*R \; (mW)$
$Noise = No*R \; (mW)$

}— POWER

## FIG.10

# FIG.11

MEMORY
UNIT
106

CELL TRANSITION
INDEX
CALCULATING
UNIT
~112

RADIO
COMMUNICATION
UNIT
102

CELL
TRANSITION
CONTROL UNIT
~114

RADIO
COMMUNICATION
UNIT
102

# FIG.12

BASEBAND
CONTROL
DEVICE
~506

COMMUNICATION
UNIT
~502

ACCESS
GATEWAY
600

RADIO
COMMUNICATION
UNIT
~504

MEMORY UNIT
~508

EP 2 800 420 A1

# FIG.13

512

| HANDOVER CONTROL UNIT | ←→ | RADIO COMMUNICATION UNIT 504 |

# FIG.14

START

S1402

MEASURE SERVING CELL
AND NEIGHBOR CELL

S1404

IDENTIFY
FREQUENCY ARRANGEMENT

S1406

CALCULATE CELL TRANSITION
INDEX ACCORDING TO
FREQUENCY ARRANGEMENT

S1408

IDLE MODE?

NO

YES

S1410

COMPARE WITH THRESHOLD
FOR ANOTHER CELL

S1414

SEND MEASUREMENT REPORT

S1416

RECEIVE HANDOVER
INSTRUCTION FROM NETWORK

S1412

PERFORM CELL
TRANSITION PROCESS

S1418

PERFORM CELL
TRANSITION PROCESS

## INTERNATIONAL SEARCH REPORT

| International application No. |
|---|
| PCT/JP2012/082244 |

**A. CLASSIFICATION OF SUBJECT MATTER**
*H04W48/18(2009.01)i, H04B1/707(2011.01)i, H04W36/14(2009.01)i, H04W72/04(2009.01)i, H04W88/06(2009.01)i*

According to International Patent Classification (IPC) or to both national classification and IPC

**B. FIELDS SEARCHED**

Minimum documentation searched (classification system followed by classification symbols)
H04W48/18, H04B1/707, H04W36/14, H04W72/04, H04W88/06

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2010/073830 A1  (Sharp Corp.), 01 July 2010 (01.07.2010), entire text; all drawings & JP 2011-259494 A      & EP 2373084 A1 | 1-10 |
| A | NTT DOCOMO, Issues on narrow measurement bandwidth, TSG-RAN Working Group 4 Meeting #60 R4-114243, 2011.08.26 | 1-10 |
| A | NTT DOCOMO, Further analysis for the issue of narrow measurement bandwidth, TSG-RAN Working Group 4 Meeting #60bis R4-115290, 2011.10.14 | 1-10 |
| A | Ericsson, ST-Ericsson, Analysis of Wider Measurement BW for RSRQ, TSG-RAN Working Group 4(Radio) meeting #61 R4-115700, 2011.11.18 | 1-10 |

☐  Further documents are listed in the continuation of Box C.        ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 January, 2013 (15.01.13) | 29 January, 2013 (29.01.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011082979 A
- JP 2011286882 A